# EUROPÄISCHE PATENTANMELDUNG

(11) **EP 2 684 643 A2**
(43) Veröffentlichungstag der Anmeldung: **15.01.2014**
(21) Anmeldenummer: 12004335.1
(22) Anmeldetag: 06.06.2012
(51) Int. Cl.: B24B 13/00, B24B 13/06, B24B 41/02, B24B 47/08, B24B 47/14, B23Q 1/25

(54) **Vorrichtung und Verfahren zur Bearbeitung eines optischen Werkstücks**

(30) Priorität: 22.05.2012 EP 12003982; 24.05.2012 EP 12004033
(71) Anmelder: Schneider GmbH & Co. KG, 35112 Fronhausen (DE)
(72) Erfinder: Schneider, Gunter, 35037 Marburg (DE)
(74) Vertreter: Von Rohr

(57) **Zusammenfassung**

Es werden eine Vorrichtung und ein Verfahren zur spanenden Bearbeitung einer Flachseite eines optischen Werkstücks vorgeschlagen. Die Vorrichtung weist zwei Flachführungen und eine Seitenführung zur fluidischen Führung einer Spindeleinheit und/oder eines Schlittens auf. Ein Linearantrieb mit einem zugeordneten Werkzeug ist auf einem Schlitten mit einem Rundtisch angeordnet. Es wird eine hochgenaue Bearbeitung ermöglicht.

## Beschreibung

Die vorliegende Erfindung betrifft generell die Bearbeitung von vorzugsweise optischen Flächen bzw. Werkstücken, insbesondere Spiegeln oder Linsen, besonders bevorzugt durch Stirndrehen. Insbesondere betrifft die vorliegende Erfindung eine Vorrichtung gemäß dem Oberbegriff des Anspruchs 1 sowie ein Verfahren zum Stirndrehen gemäß dem Oberbegriff des Anspruchs 15.

Die vorliegende Erfmdung bezieht sich insbesondere auf die spanende Bearbeitung in einer Drehmaschine bzw. auf das Stirndrehen. Mittels eines Linearantriebs, der oft auch als Fast-Tool-Antrieb oder Fast-Tool-Anordnung bezeichnet wird, wird ein Werkzeug, insbesondere ein Drehmeißel oder Drehstahl, in Abhängigkeit von der Drehlage des zu bearbeitenden Werkstücks linear bewegt bzw. zugestellt. Es erfolgt insbesondere eine hin- und hergehende Bewegung, auch als oszillierende Bewegung oder reziprozierende Bewegung bezeichnet. So können insbesondere nicht-rotationssymmetrische Bearbeitungen erfolgen und nicht-rotationssymmetrische Oberflächen bzw. Freiformflächen erzeugt werden, insbesondere um gewünschte optische Eigenschaften eines optischen Bauteils, wie eines Spiegels oder einer Linse, zu realisieren. Eine solche Vorrichtung ist beispielsweise aus der EP 0 849 038 A2 bekannt.

Die US 7,089,835 B2 zeigt eine Vorrichtung zur Bearbeitung eines optischen Werkstücks, Ein Werkstückantrieb lässt das Werkstück um eine horizontale Rotationsachse rotieren. Das Werkstück ist axial nicht verstellbar. Die Vorrichtung weist einen parallel zur Rotationsachse bewegbaren ersten Schlitten sowie einen davon getragenen, quer zur Bewegungsachse bewegbaren zweiten Schlitten auf, Der zweite Schlitten trägt einen Rundtisch mit einem darauf angeordneten Werkzeug. Die Schlitten bilden einen Slow-Tool-Antrieb bzw. eine Slow-Tool-Anordnung. Bei der Bearbeitung wird nämlich der gesamte Schlittenaufbau in Abhängigkeit von der Rotationslage des Werkstücks bewegt.

Der vorliegenden Erfmdung liegt die Aufgabe zugrunde, eine Vorrichtung zur vorzugsweise spanenden bzw. drehenden Bearbeitung eines vorzugsweise optischen Werkstücks und ein Verfahren zum spanenden Bearbeiten, insbesondere Stirndrehen, einer optischen Flachseite eines optischen Werkstücks anzugeben, wobei eine hoch genaue Bearbeitung ermöglicht oder erleichtert wird.

Die obige Aufgabe wird durch eine Vorrichtung gemäß Anspruch 1 oder ein Verfahren gemäß Anspruch 15 gelöst. Vorteilhafte Weiterbildungen sind Gegenstand der Unteransprüche.

Ein erster Aspekt der vorliegenden Erfindung liegt darin, dass die Vorrichtung vorzugsweise zwei Flachführungen zur fluidischen Führung eines linear hin- und herbewegbaren Bauteils mit zugeordnetem Werkstück oder Werkzeug aufweist, wobei die Flachführungen an zwei gegenüberliegenden Seiten des Bauteils angeordnet sind.

Insbesondere liegen die beiden Flachführungen auf entgegengesetzten Seiten auf gleicher Höhe und führen das Bauteil dadurch sehr drehsteif bzw. sehr genau in einer Horizontalebene.

Die Vorrichtung weist vorzugsweise eine insbesondere unter dem Bauteil angeordnete Seitenführung zur fluidischen Führung des Bauteils seitlich quer zur linearen Bewegungsrichtung des Bauteils auf. So wird eine äußerst genaue, also hoch präzise Führung ermöglicht.

Die Seitenführung ist vorzugsweise mittig zwischen den Flachführungen und/oder unterhalb des Bauteils angeordnet. Dies gestattet eine sehr präzise Seitenführung und minimiert potentiell auf das Bauteil wirkende Kippmomente.

Die Seitenführung ist vorzugsweise ebenfalls als Flachführung ausgebildet.

Unter dem Begriff "Flachführung" sind bei der vorliegenden Erfmdung vorzugsweise solche Führungen zu verstehen, deren Länge mehr als das 1,5-fache, insbesondere mehr als das 5-fache, deren Breite beträgt.

Unter "fluidischer Führung" ist bei der vorliegenden Erfindung vorzugsweise das Führen bzw. Lagern mittels eines Fluids, insbesondere Gas oder Luft einerseits oder Flüssigkeit andererseits, zu verstehen. Dementsprechend werden vorzugsweise aerostatische oder hydrostatische Führungen eingesetzt. Diese gestatten bei guter Leichtgängigkeit ein sehr genaues und/oder spielfreies Führen.

Gemäß einer Ausführungsvariante handelt es sich bei dem linear bewegbaren Bauteil insbesondere um ein Lagerteil einer Spindeleinheit, wobei in dem Lagerteil eine Spindel der Spindeleinheit drehbar gelagert ist. Die Spindel ist vorzugsweise mit einer Aufnahme zur Halterung des Werkstücks versehen und mittels eines Drehantriebs in Drehung bzw. Rotation versetzbar. Das Bauteil bzw. Lagerteil ist linear, insbesondere in horizontaler Richtung bzw. in axialer Richtung bewegbar. Dementsprechend ist die Spindeleinheit in Richtung der Drehachse bzw. Rotationsachse der Spindel und damit in Richtung des Werkzeugs bewegbar.

Die bevorzugte Führung über zwei Flachführungen an gegenüberliegenden Seiten und eine unter dem Bauteil bzw. Lagerteil angeordnete Seitenführung gestatten eine hoch präzise Führung der Spindeleinheit und Spindel und damit eine hoch genaue Bearbeitung des Werkstücks.

Vorzugsweise liegt die Drehachse der Spindel in einer Horizontalebene, wobei die Flachfülarungen bzw. deren Taschen und Lagerflächen in oder symmetrisch zu dieser Horizontalebene angeordnet sind oder verlaufen. Dies ist einer hoch genauen Führung und damit auch hoch genauen Bearbeitung zuträglich.

Vorzugsweise ist bzw. sind die Seitenführung bzw. deren Taschen und Lagerflächen in oder symmetrisch zu einer Vertikalebene angeordnet, die die Drehachse der Spindel enthält. Dies ist einer hoch genauen Führung und damit hoch genauen Bearbeitung zuträglich.

Gemäß einem anderen - auch unabhängig von der bevorzugten Führung realisierbaren - Aspekt der vorliegenden Erfindung weist die Vorrichtung einen Werkstückantrieb mit zwei - insbesondere direkt - mit dem Lagerteil verbundenen Linearmotoren oder Läufern zur linearen Bewegung des Lagerteils und damit der Spindeleinheit in Bewegungsrichtung bzw. Richtung der Drehachse auf.

Die Linearmotoren bzw. Läufer sind vorzugsweise eisenlos ausgebildet.

Die Linearmotoren bzw. Läufer sind vorzugsweise symmetrisch zu einer die Bewegungsrichtung enthaltenden Vertikalebene und/oder oberhalb der Drehachse der Spindel und/oder zumindest im Wesentlichen in einer Horizontalebene angeordnet. Alternativ können die Linearmotoren auch auf entgegengesetzten Seiten des Lagerteils bzw. der Spindeleinheit bzw. symmetrisch zur Drehachse der Spindel angeordnet sein. Dies ist einer hoch genauen, insbesondere zumindest weitgehend kippmomentfreien Bewegung der Spindeleinheit und damit der Spindel und damit auch des Werkstücks zuträglich und ermöglicht bzw. erleichtert daher eine hoch genaue Bearbeitung des Werkstücks.

Gemäß einem weiteren, auch unabhängig realisierbaren Aspekt der vorliegenden Erfindung weist der Werkstückantrieb vorzugsweise einen Maßstab auf, der direkt mit dem Lagerteil bzw. der Spindeleinheit verbunden ist. Dies gestattet eine sehr nahe Anordnung des Maßstabs an der Spindel und/oder nahe am Spindelkopf und damit eine hoch genaue Messung der tatsächlichen axialen Lage der Spindel, so dass dementsprechend eine sehr genaue Steuerung oder Regelung ermöglicht wird. Dies ist wiederum einer hoch genauen Bearbeitung des Werkstücks zuträglich.

Das Lagerteil ist vorzugsweise zumindest im Wesentlichen zylindrisch ausgebildet und/oder weist vorzugsweise eine zumindest im Wesentlichen zylindrische Außenkontur auf. Dies ist einem sehr kompakten und/oder leichten Aufbau zuträglich. Insbesondere ist eine derartige Ausbildung einer weitgehend gleichmäßigen bzw. definierten Verformung bei Temperaturschwankungen zuträglich, so dass eine hoch genaue Führung bzw. Bewegung unterstützt oder erleichtert und damit entsprechend auch eine hoch genaue Bearbeitung ermöglicht oder erleichtert wird.

Gemäß einem anderen Aspekt der vorliegenden Erfindung bildet oder ist das Bauteil vorzugsweise ein Schlitten. Auch in diesem Fall führen die vorschlagsgemäßen Führungen, also die zwei Flachführungen und die Seitenführung, zu einer sehr genauen Führung des Schlittens und ermöglichen oder erleichtern damit eine sehr genaue Bearbeitung des Werkstücks.

Besonders bevorzugt trägt der Schlitten einen Rundtisch und/oder einen Linearmotor mit dem Werkzeug.

Vorzugsweise schneidet die Mittelachse der Seitenführung die Achse des Rundtischs. Dies ist einer sehr genauen Führung zuträglich und ermöglicht bzw. erleichtert daher eine hoch genaue Bearbeitung.

Vorzugsweise ist das Werkzeug mittels des Linearantriebs linear hin- und herbewegbar. Die Bewegungsrichtung oder -achse des Werkzeugs schneidet vorzugsweise die Rundachse des Rundtischs. Dies ist einer hoch genauen Schwenkausrichtung und/oder Zustellung des Werkzeugs zuträglich und ermöglicht bzw. erleichtert daher eine hoch genaue Bearbeitung des Werkstücks.

Besonders bevorzugt ist die vorschlagsgemäße Führung sowohl werkzeugseitig als auch werkstückseitig realisiert, also insbesondere sowohl für die Lagerung und Führung der Spindeleinheit als auch für die Lagerung und Führung des Schlittens vorgesehen.

Besonders bevorzugt weisen die vorschlagsgemäßen Führungen jeweils zwei paarweise gegenüberliegende Taschen auf. Dies ist einer hoch genauen Lagerung und Führung und damit einer hoch genauen Bearbeitung zuträglich.

Besonders bevorzugt weisen bzw. weist die Flachführung und/oder die Seitenführung jeweils ein Schwert mit zugeordneten, gegenüberliegenden Taschen zur fluidischen Lagerung auf. Dies ist einer hoch genauen Lagerung und Führung und damit einer hoch genauen Bearbeitung zuträglich.

Besonders bevorzugt sind die Taschen mit dem jeweiligen Bauteil oder Schwert fest verbunden und mit diesem zusammen bewegbar. Hierdurch wird eine hoch genaue Führung auch bei der vorgesehenen linearen Bewegung des Bauteils erreicht, insbesondere können unterschiedliche Auskragungen und Durchbiegungen vermieden werden, die ansonsten bei stationären Taschen in Abhängigkeit von der Lage des Bauteils variieren können.

Besonders bevorzugt sind die Flachführungen und die Seitenführung für die Spindeleinheit und/oder für den Schlitten als hydrostatische Führung ausgebildet.

Gemäß einem weiteren Aspekt der vorliegenden Erfindung wird vorzugsweise der Anlagepunkt einer Schneide des Werkzeugs am zu bearbeitenden Werkstück während der Bearbeitung einer Flachseite des Werkstücks variiert. Dies erfolgt insbesondere durch ein Schwenken des Werkzeugs bzw. Linearantriebs, der das Werkstück trägt, vorzugsweise um eine vertikale Achse. So kann insbesondere bei sehr lang anhaltender Bearbeitung eines Werkstücks der auftretende Verschleiß kompensiert und/oder die gesamte Schneide bzw. ein größerer Teil der Schneide des Werkzeugs zur Bearbeitung eingesetzt werden, wodurch eine hoch genaue oder genauere Bearbeitung des Werkstücks ermöglicht wird. Dies gilt insbesondere für hoch präzise Bearbeitungen, bei denen für jedes Werkstück ein neues Werkzeug verwendet wird. Diese bevorzugte Art der Bearbeitung kann jedoch grundsätzlich auch dann eingesetzt werden, wenn ein Werkzeug für die Bearbeitung mehrerer Werkstücke eingesetzt wird.

Besonders bevorzugt wird zum Schwenken ein Rundtisch eingesetzt. Der Rundtisch trägt insbesondere den Linearantrieb mit dem Werkzeug.

Gemäß einem weiteren Aspekt der vorliegenden Erfindung wird das Werkstück vorzugsweise um eine Rotationsachse rotiert und ist in Richtung der Rotationsachse mittels mindestens eines Linearmotors zu dem Werkzeug zustellbar, wobei der Linearantrieb mit dem hin- und herbewegbaren Werkzeug mittels eines Schlittens in einer Querrichtung quer zur Rotationsachse verstellbar und mittels seines vom Schlitten getragenen Rundtischs um eine Achse quer zur Rotationsachse und Querrichtung verschwenkbar ist. Dies ermöglicht eine Minimierung des erforderlichen Bewegungswegs oder Verstellwegs des Werkzeugs und damit des Linearantriebs und damit eine Minimierung des erforderlichen Hubs für die sehr schnelle, insbesondere oszillierende Bewegung des Werkzeugs. Ein gegenüber der Werkzeugbewegung wesentlich langsameres Zustellen erfolgt dann nämlich werkstückseitig, nämlich durch axiales Bewegen des Werkstücks. Vorzugsweise ist zusätzlich der Bearbeitungswinkel des Werkzeugs durch Drehen des Rundtischs und damit Schwenken des Linearantriebs einstellbar. So kann eine optimale Bearbeitung sehr unterschiedlicher Werkstücke bzw. optischer Flachseiten von Werkstücken mit sehr geringen Fehlern und insbesondere auch eine hoch genaue Bearbeitung komplizierter Flächen, beispielsweise bei der Herstellung von Fresnel-Linsen, erfolgen. Dementsprechend wird eine hoch genaue Bearbeitung ermöglicht oder zumindest erleichtert.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine schematische perspektivische Ansicht einer vorschlagsgemäßen Vorrichtung;
- Fig. 2: eine erste schematische Seitenansicht der Vorrichtung;
- Fig. 3: einen schematischen Schnitt eines Werkstückantriebs der Vorrichtung;
- Fig. 4: eine zweite schematische Seitenansicht der Vorrichtung mit etwas detaillierterem Schlitten sowie mit angedeutetem Rundtisch und Linearantrieb;
- Fig. 5: eine ausschnittsweise Vergrößerung des Schlittens und zugeordneten Maschinenbetts im Bereich einer Flachführung und einer Seitenführung; und
- Fig. 6: eine schematische Ansicht von oben eines Werkstücks bei der Bearbeitung durch ein Werkzeug.

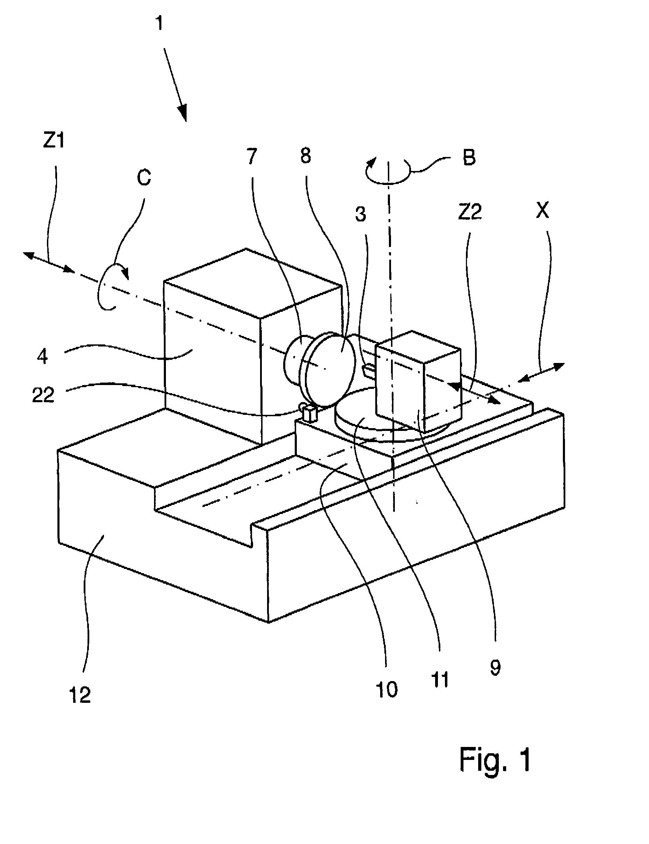

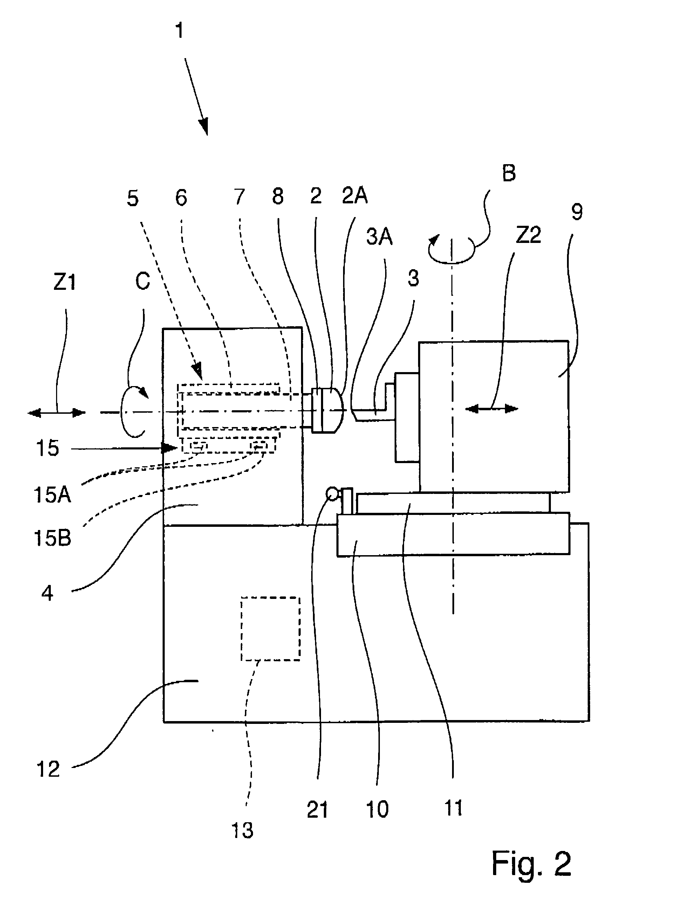

Fig. 1 und 2 zeigen in einer schematischen Perspektive bzw. Seitenansicht eine vorschlagsgemäße Vorrichtung 1 zum formgebenden Bearbeiten eines vorzugsweise optischen Werkstücks 2, insbesondere einer optischen Fläche, beispielsweise eines Headup-Displays, Spiegels oder einer Linse. Vorzugsweise erfolgt eine spanende Bearbeitung des Werkstücks 2 bzw. dessen Fläche oder Flachseite 2A durch Drehen, insbesondere durch Stirndrehen,

Es ist anzumerken, dass das zu bearbeitende Werkstück 2 aus Vereinfachungsgründen in Fig. 1 nicht dargestellt ist, sondern nur in Fig. 2.

Ausgangspunkt für die Entstehung bzw. Bearbeitung ist ein Rohling. Dieser wird spanend oder in einer sonstigen formgebenden Bearbeitung und ggf. in weiteren Bearbeitungsschritten so bearbeitet, dass am Ende ein fertiges optisches Werkstück 2 mit den gewünschten optischen Eigenschaften entsteht. Der Begriff "Werkstück" bezeichnet im Rahmen der vorliegenden Beschreibung vorzugsweise sowohl den Rohling vor Durchführung der notwendigen Bearbeitungsschritte, als auch am Ende das fertige Werkstück 2.

Das Werkstück 2 besteht vorzugsweise aus Metall oder Kunststoff. Jedoch kann grundsätzlich auch ein sonstiger in geeigneter Weise zu bearbeitender Werkstoff verwendet werden.

Die Bearbeitung des Werkstücks 2 erfolgt mittels eines Werkzeugs 3, das das Werkstück 2 bzw. dessen Flachseite 2A spanend bearbeitet. Besonders bevorzugt weist das Werkzeug 3 eine sehr verschleißfeste Schneide 3A, insbesondere aus Diamant, auf, wie in Fig. 2 nur angedeutet.

Vorzugsweise weist die Vorrichtung 1 einen Werkstückantrieb 4 auf. Der Werkstückantrieb 4 dient dazu, das zu bearbeitende Werkstück 2 rotieren zu lassen. Die Vorrichtung 1 bzw. der Werkstückantrieb 4 weist vorzugsweise eine Spindeleinheit 5 - auch Pinole genannt - auf. Die Spindeleinheit 5 weist ihrerseits ein Lagerteil 6 sowie eine darin drehbar gelagerte Spindel 7 auf, wie insbesondere in Fig. 2 angedeutet.

Bei der Spindel 7 handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Schnittstelle oder Spannzange bzw. Aufnahme 8 für das Werkstück 3 bzw. den Rohling. Grundsätzlich kann eine direkte Aufnahme bzw. Einspannung beispielsweise über ein Membran- oder Vakuumfutter erfolgen, bedarfsweise kann das Werkstück 2 bzw. der Rohling jedoch auch mittelbar über einen nicht dargestellten Halter gehalten werden. Das Werkstück 2 oder der Halter wird dann eingespannt, beispielsweise mittels eines Vakuum- oder Membranfutters als Aufnahme 8.

Das Werkstück 2 bzw. der Halter ist vorzugsweise in einer bestimmten axialen Lage und/oder Drehlage einspannbar und/oder definiert drehbar, um das Werkstück 2 definiert bearbeiten zu können.

Mittels des Werkstückantriebs 4 bzw. der Spindeleinheit 5 oder Spindel 7 ist das eingespannte bzw. gehaltene Werkstück 2 zur Bearbeitung um eine C-Achse in Drehung bzw. Rotation versetzbar. Die Spindeleinheit 5 bzw. Spindel 7 bildet also insbesondere einen Drehantrieb für das Werkstück 2. Der Werkstückantrieb 4 bildet insbesondere eine gerechnete oder gesteuerte Rundachse C. Besonders bevorzugt ist das Werkstück 2 gesteuert oder geregelt mit einer bestimmten Drehzahl und/oder mit einer definierten Drehlage in Drehung bzw. Rotation versetzbar.

Zusätzlich ist das Werkstück 2 vorzugsweise auch in Richtung der Dreh- bzw. Rotationsachse C bzw. axial - also linear in einer Bewegungsrichtung oder Bewegungsachse Z1 - bewegbar. Besonders bevorzugt wird eine gerechnete oder gesteuerte Linearachse Z1 gebildet. Der Werkstückantrieb 4 ist hierzu vorzugsweise entsprechend ausgebildet.

Die Vorrichtung 1 weist vorzugsweise einen Linearantrieb 9 auf. Das Werkzeug 3 wird vom Linearantrieb 9 gehalten und ist mittels des Linearantriebs 9 relativ zum Werkstück 2 linear in einer Bewegungsrichtung bzw. Achse Z2 hin- und herbewegbar, wie durch den entsprechenden Doppelpfeil angedeutet. Das Werkzeug 3 ist mittels des Linearantriebs 9 sehr schnell hin- und herbewegbar bzw. oszillierend oder reziprozierend bewegbar. Insbesondere ist das Werkzeug 3 gerechnet bzw. gesteuert bewegbar, so dass eine gerechnete oder gesteuerte Linearachse Z2 gebildet wird.

Insbesondere bildet der Linearantrieb 9 einen so genannten Fast-Tool-Antrieb bzw. eine Fast-Tool-Anordnung zum schnellen Hin- und Herbewegen des Werkzeugs 3, besonders bevorzugt in Abhängigkeit von der Drehlage des Werkstücks 2. Insbesondere ist das Werkzeug 3 mittels des Linearantriebs 9 während einer Umdrehung des Werkstücks 2 hin- und herbewegbar, bedarfsweise sogar mehrfach hin- und herbewegbar, um insbesondere nicht rotationssymmetrische Flächen bzw. Flachseiten 2A auf dem Werkstück 2 erzeugen oder herstellen zu können.

Das Werkstück 2 und das Werkzeug 3 sind vorzugsweise quer zueinander in X-Richtung verstellbar. Die Vorrichtung 1 weist hierzu vorzugsweise einen Schlitten 10 auf, der in X-Richtung verstellbar bzw. bewegbar ist. Insbesondere ist der Schlitten 10 gesteuert oder gerechnet bewegbar, so dass eine gerechnete oder gesteuerte Linearachse X gebildet wird.

Vorzugsweise ist der Linearantrieb 9 auf dem Schlitten 10 angeordnet bzw. wird von diesem mittelbar oder unmittelbar getragen.

Das Werkzeug 3 ist vorzugsweise relativ zum Werkstück 2 schwenkbar, insbesondere um eine Schwenkachse B, insbesondere um den Anstellwinkel des Werkzeugs 3 relativ zum Werkstück 2 einstellen zu können. Besonders bevorzugt wird ein gesteuertes oder gerechnetes Verschwenken ermöglicht, also eine gerechnete oder gesteuerte Rundachse B gebildet.

Vorzugsweise weist die Vorrichtung 1 einen Rundtisch 11 zum Drehen bzw. Schwenken des Linearantrieb 9 und damit des Werkzeugs 3 auf. Der Linearantrieb 9 ist vorzugsweise auf dem Rundtisch 11 - insbesondere außermittig und/oder in einem Randbereich - angeordnet bzw. von diesem getragen.

Der Rundtisch 11 ist seinerseits vorzugsweise auf dem Schlitten 10 angeordnet bzw. wird von diesem getragen. Der Schlitten 10 trägt also vorzugsweise sowohl den Rundtisch 11 und den darauf angeordneten Linearantrieb 9.

Die Vorrichtung 1 weist vorzugsweise ein Gestell oder Maschinenbett 12 auf, das beim Darstellungsbeispiel insbesondere den Werkstückantrieb 4 und/oder Schlitten 10 trägt bzw. führt.

Die Vorrichtung 1 weist vorzugsweise eine in Fig. 2 nur angedeutete Steuereinrichtung 13 auf, die insbesondere durch eine speicherprogrammierbare Steuerung, CNC-Steuerung (numerische bzw. rechnergestützte Steuerung) oder dergleichen gebildet sein oder eine solche enthalten kann und/oder eine derartige Steuerung steuern kann. Die Steuereinrichtung 13 dient insbesondere der Steuerung oder Regelung des Werkstückantriebs 4, Linearantriebs 9, Schlittens 10 und/oder Rundtischs 11.

Vorzugsweise wird von der B-Achse, C-Achse, X-Achse, Z1-Achse und/oder Z2-Achse jeweils eine CNC-Achse gebildet.

Besonders bevorzugt werden beim Darstellungsbeispiel werkzeugseitig nur zwei Linearachsen, nämlich die X-Achse und die Z2-Achse gestapelt.

Vorzugsweise werden beim Darstellungsbeispiel werkzeugseitig drei Achsen gestapelt, nämlich die beiden Linearachsen X und Z2 sowie die Rundachse B.

Besonders bevorzugt wird die schnelle Z2-Achse bzw. die Werkzeugachse bzw. der Direktantrieb für das Werkzeug 3, hier also der Linearantrieb 9, bei der Stapelung von Achsen als oberste Achse bzw. oben angeordnet.

Die C-Achse bzw. Z1-Achse verläuft vorzugsweise zumindest im Wesentlichen horizontal.

Die Z2-Achse verläuft vorzugsweise zumindest im Wesentlichen horizontal.

Insbesondere verlaufen die beiden Linearachsen Z1 und Z2 in einer gemeinsamen Horizontalebene.

Der Quervorschub bzw. die X-Richtung oder -Achse verläuft vorzugsweise horizontal und/oder quer, insbesondere senkrecht, zu der Z1-, Z2- und/oder C-Richtung bzw. -Achse.

Die Dreh- bzw. Rundachse B verläuft vorzugsweise quer, insbesondere senkrecht, zu der Rotations- bzw. Rundachse C und/oder X-, Z1- und/oder Z2-Richtung bzw. -Achse.

Insbesondere verläuft die Dreh- bzw. Rundachse B beim Darstellungsbeispiel zumindest im Wesentlichen vertikal.

Vorzugsweise schneidet die B-Achse die Z2-Achse.

Vorzugweise verläuft die Z2-Richtung bzw. -Achse durch die Drehmitte des Rundtischs 11.

Vorzugsweise ist das Werkzeug 3 bzw. dessen Schneide 3A zumindest im Wesentlichen oder unmittelbar benachbart zu bzw. im Bereich der B-Achse angeordnet.

Insbesondere bewegt sich das Werkzeug 3 bzw. dessen Schneide 3A mittels des Linearmotors 9 bis zur B-Achse oder über diese hinweg während der linearen Bewegung bei der Bearbeitung im Z2-Richtung und/oder bei maximalem Hub.

Beim Darstellungsbeispiel verläuft die Bewegungsachse bzw. Linearachse Z2 vorzugsweise zumindest im Wesentlichen parallel zu der Drehachse bzw. Rundachse C des Werkstücks 3. Die Richtung der Z2-Achse einerseits und die Richtung der Z1-Achse bzw. die axiale Ausrichtung der Dreh- bzw. Rundachse C andererseits können parallel zueinander oder geneigt zueinander verlaufen und/oder zueinander einstellbar bzw. neigbar sein, beispielsweise um die Flachseite 2A einer Fresnel-Linse oder eines Fresnel-Spiegels herstellen oder bearbeiten zu können. Bei einer relativen Neigung ist diese vorzugsweise derart begrenzt oder gering, dass das bevorzugte Stirndrehen zur Bearbeitung des Werkstücks 2 in gewünschter bzw. erforderlicher Weise noch erfolgen kann.

Vorzugsweise dient die Z1-Achse der grundsätzlichen Zustellung von Werkstück 2 und Werkzeug 3, insbesondere über größere Verfahr- oder Zustellwege, beispielsweise bei einer starken Krümmung und einem großen Durchmesser der zu bearbeitenden bzw. herzustellenden Fläche bzw. Flachseite 2A und/oder beispielsweise zum Einspannen oder Wechseln des Werkstücks 2 und/oder Werkzeugs 3. Vorzugsweise erfolgt keine von der Drehlage des Werkstücks 2 bzw. der Spindel 7 abhängige Bewegung der Z1-Achse bzw. in Z1-Richtung. Die Z1-Achse ist insbesondere eine Slow-Slide-Servo-Achse bzw. Slow-Servo-Achse und wird vorzugsweise auch in der Drehlängenbearbeitung genutzt.

Vorzugsweise handelt es sich bei dem Linearantrieb 9 um einen elektrisch arbeitenden Achsantrieb, insbesondere um einen sogenannten Fast-Tool-Antrieb, um das Werkzeug 3 insbesondere in Abhängigkeit von der Drehlage des Werkstücks 2 und/oder in Abhängigkeit des Abstands des Werkzeugs 3 von der Drehachse C der Spindel 7 in seiner Axiallage bzw. Z2-Achse zu steuern bzw. schnell vor- und zurückzubewegen. Der Linearantrieb 9 gestattet eine vorzugsweise lineare und/oder gesteuerte bzw. geregelte Bewegung des Werkzeugs 3 und bildet daher vorzugsweise eine gesteuerte oder geregelte Linearachse Z.

Die Linearachse Z2 bildet daher im Gegensatz zur Z1-Achse eine vorzugsweise hochdynamische bzw. schnelle Achse oder Bewegung, insbesondere in Abhängigkeit von der Drehlage des Werkstücks 2 bzw. der Spindel 7. Der Linearantrieb 9 dient insbesondere also einer sehr schnellen Bewegung des Werkzeugs 3 in Z2-Richtung in Abhängigkeit von der Drehlage des Werkstücks 2 mit jedoch verhältnismäßig kleinem Hub. Der maximale Hub bzw. Verfahrweg des Linearantriebs 9 bzw. Werkzeugs 3 beträgt vorzugsweise mehrere mm, insbesondere mehr als 10 mm oder 12 mm, besonders bevorzugt etwa 15 mm, insbesondere bei Bewegungsfrequenzen von mehr als 25 oder 50 Hz und/oder bei Beschleunigungen von mehr als 50 m/s², oder 100 m/s², besonders bevorzugt von etwa 300 m/s². Das Werkzeug 3 kann während einer Umdrehung des Werkstücks 2 vorzugsweise auch mehrmals in Z2-Richtung vor- und zurückbewegt werden.

Die Steuerung oder Regelung der Z2-Achse, also die Bewegung des Werkzeugs 3, erfolgt vorzugsweise über die Steuereinrichtung 13, insbesondere wobei die Drehlage des Werkstücks 2 bzw. der Aufnahme 8 oder Spindel 7 über einen nicht dargestellten Winkelgeber o. dgl. insbesondere an oder in der Spindeleinheit 5 erfassbar ist.

Während der Bearbeitung des Werkstücks 2 wird dieses vorzugsweise relativ zu dem Werkzeug 3 in X-Richung verfahren, um die gewünschte flächenmäßige Bearbeitung, insbesondere einer Fläche bzw. der Flachseite 2A, zu ermöglichen. Hierzu sind der Werkstückantrieb 4 und der Linearantrieb 2 entsprechend relativ zueinander verstellbar bzw. verfahrbar. Insbesondere kann eine Bearbeitung, wie in der EP 0 849 038 A2 oder DE 10 2009 011 194 A2 beispielsweise beschrieben, erfolgen.

Vorzugsweise ist das Werkzeug 3 zur Feineinstellung bzw. Höheneinstellung auch in vertikaler Richtung (üblicherweise als Y-Richtung bezeichnet) verstellbar, um sicherzustellen, dass das Werkzeug 3 beim Quervorschub in X-Richtung durch die Drehachse C bewegbar ist, also das Werkstück 2 bzw. die Flachseite 2A auch im Bereich der Drehachse C bearbeitbar ist. Insbesondere ist so erreichbar, dass die Bewegungsachsen Z 1 und Z2 in einer gemeinsamen Horizontalebene liegen.

Besonders bevorzugt ist die vorgenannte Feineinstellung oder Höheneinstellung durch ein Festkörpergelenk und/oder einen nicht dargestellten Antrieb zur ausschließlichen Feineinstellung oder -verstellung gebildet. Das Festkörpergelenk oder eine sonstige Feineinstellung kann beispielsweise an oder mittels einer Halterung 9A des Linearantriebs 9 zur Aufnahme bzw. Halterung des Werkzeugs 3 oder auf sonstige geeignete Art und Weise realisiert werden.

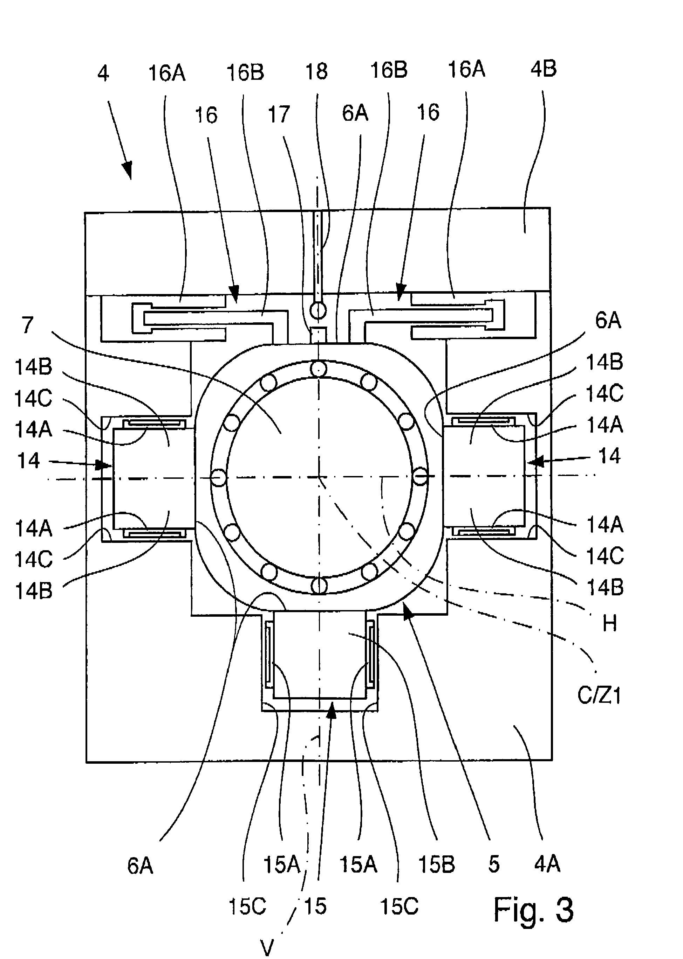

Nachfolgend wird zunächst anhand von Fig. 2 und der schematischen Schnittdarstellung des Werkzeugantriebs 4 gemäß Fig. 3 ein besonders bevorzugter Aufbau des Werkzeugantriebs 4 bzw. ein besonders bevorzugter Führungsaufbau gemäß einem Aspekt der vorliegenden Erfindung näher erläutert.

Die Spindeleinheit 5 bzw. deren Lagerteil 6 ist vorzugsweise linear bewegbar, beim Darstellungsbeispiel in Z1-Richtung. Die Spindeleinheit 5 bzw. das Lagerteil 6 stellt daher ein linear bewegbares Bauteil zur linearen Bewegung des zugeordneten Werkstücks 2 bzw. Werkzeugs 3, hier des Werkstücks 2, im Sinne der vorliegenden Erfindung bzw. des Patentanspruchs 1 dar. Entsprechendes gilt für den Schlitten 10 und die Halterung 9A, die jeweils ein derartiges linear bewegbares Bauteil im Sinne der vorliegenden Erfindung darstellen. Hierauf wird jedoch später näher eingegangen.

Die Vorrichtung 1 bzw. der Werkstückantrieb 4 weist vorzugsweise zwei Flachführungen 14 und/oder eine Seitenführung 15 zur fluidischen Führung des Bauteils, hier eher Spindeleinheit 5 bzw. des Lagerteils 6, auf, wie in Fig. 3 gezeigt.

Die Flachführungen 14 sind an zwei gegenüberliegenden Seiten des Bauteils bzw. Lagerteils 6 angeordnet und/oder dienen einer Führung des Bauteils bzw. Lagerteils 6 in vertikaler Richtung an gegenüberliegenden Seiten des Bauteils bzw. Lagerteils 6. Insbesondere sind die Flachführungen 14 horizontal neben oder auf beiden Seiten der Spindel 7 bzw. Bewegungsachse Z1 bzw. Drehachse C angeordnet.

Besonders bevorzugt sind die Flachführungen 14 in oder symmetrisch zu einer Horizontalebene H angeordnet, die die Bewegungsachse Z1 bzw. Rundachse C enthält.

Die Seitenführung 15 dient vorzugsweise der fluidischen Führung des Bauteils bzw. Lagerteils 6 seitlich quer zur Bewegungsrichtung Z1 bzw. Drehachse C. Die Seitenführung 15 ist vorzugsweise unter dem Bauteil bzw. Lagerteil 6 bzw. der Spindel 7 angeordnet. Die Seitenführung 15 ist insbesondere in oder symmetrisch zu einer Vertikalebene V angeordnet, die die Bewegungsachse Z1 bzw. Drehachse C enthält.

Die Flachführungen 14 und die Seitenführung 15 sind vorzugsweise zumindest sehr ähnlich oder baugleich aufgebaut. Nachfolgend wird daher zunächst ein besonders bevorzugter Aufbau der Seitenführung 15 näher erläutert, wobei diese Erläuterungen und Ausführungen insbesondere entsprechend für die Flachführungen 14 gelten, die besonders bevorzugt baugleich ausgebildet sind.

Die Seitenführung 15 weist Taschen 15A für die fluidische Führung bzw. Lagerung, insbesondere paarweise gegenüberliegende Taschen 15A, besonders bevorzugt zwei Paare von gegenüberliegenden Taschen 15A, auf, wie in Fig. 2 und 3 angedeutet. Die Seitenführung 15 weist vorzugsweise ein Schwert 15B auf, das die Taschen 15A trägt.

Die Taschen 15A sind vorzugsweise paarweise auf entgegengesetzten Seiten des Schwerts 15B angeordnet, weisen also voneinander weg.

Das Schwert 15B ist vorzugsweise zumindest im Wesentlichen oder abschnittsweise stegartig ausgebildet und/oder im Querschnitt quer zur Achse C bzw. Z1 vorzugsweise zumindest im Wesentlichen rechteckig ausgebildet.

Das Schwert 15B erstreckt sich vorzugsweise mit seiner Längsrichtung oder Längserstreckung parallel zu der Richtung bzw. Achse C bzw. Z1.

Die Taschen 15A sind vorzugsweise auf den Flachseiten des Schwerts 15B angeordnet.

Die Taschen 15A können auf das Schwert 15B aufgesetzt oder in dieses bzw. in die jeweilige Seitenfläche eingelassen sein.

Vorzugsweise besteht das Schwert 15B aus Stahl. Zusätzlich oder alternativ kann das Schwert 15B seitlich bzw. flachseitig mit Leisten aus einem anderen Material, beispielsweise aus Messing belegt oder teilweise bedeckt sein, insbesondere um gewisse Gleiteigenschaften bei Ausfall der fluidischen Lagerung zu gewährleisten. Vorzugsweise sind dann die Taschen 15A in diese Leisten eingelassen oder zwischen diesen angeordnet.

Es ist anzumerken, dass anstelle eines vorzugsweise durchgehenden Schwerts 15B die Taschen 15A auch auf sonstige Art und Weise, beispielsweise über separate Halterungen, mit dem Bauteil bzw. Lagerteil 6 verbunden sein können.

Die Seitenführung 15 bzw. deren Schwert 15B erstreckt sich vorzugsweise zu mehr als 50 %, insbesondere zu mehr als 80 % der Länge des Bauteils bzw. Lagerteils 6 und/oder zumindest im Wesentlichen über die gesamte axiale Länge des Bauteils bzw. Lagerteils 6.

Die Seitenführung 15 bzw. die Taschen 15A bzw. das Schwert 15B ist bzw. sind vorzugsweise fest mit dem Bauteil bzw. Lagerteil 6 verbunden, insbesondere an einer Abflachung 6A des vorzugsweise zumindest im Wesentlichen hohlzylindrischen Lagerteils 6 angeordnet bzw. angebracht, besonders bevorzugt angeschraubt, in wie Fig. 3 schematisch angedeutet. Die Taschen 15A sind dementsprechend zusammen mit dem Bauteil bzw. Lagerteil 6 fest verbunden und zusammen mit diesem bewegbar.

Die Taschen 15A einer Seite der Seitenführung 15 bzw. des Schwerts 15B wirken mit einer vorzugsweise durchgehenden bzw. gemeinsamen Gleit- bzw. Lagerfläche 15C zusammen.

Insbesondere weist die Seitenführung 15 zwei zueinander beabstandete, parallel zueinander verlaufende Lagerflächen 15C auf, die insbesondere zueinander weisen und zwischen denen die Taschen 15A angeordnet sind.

Das Schwert 15B bzw. die Taschen 15A sind - zumindest teilweise - beim Darstellungsbeispiel zwischen den Lagerflächen 15C angeordnet.

Beim Darstellungsbeispiel sind die Lagerflächen 15C vorzugsweise durch ein Gehäuseteil 4A des Werkstückantriebs 4 gebildet. Jedoch können diese auch durch entsprechende Einbauteile o. dgl. gebildet sein.

Vorzugsweise sind die Taschen 15B jeweils im Bereich eines axialen Endes des Bauteils bzw. Lagerteils 6 bzw. Schwerts 15B angeordnet. Dies ist einer sehr guten Führung quer zur Bewegungsrichtung Z1 bzw. einer guten seitlichen Führung zuträglich.

Die Seitenführung 15 bildet vorzugsweise eine "Flachführung" in dem Sinne, dass die Länge der Führung, hier also der Abstand der Taschen 15A in axialer Richtung - also in Z1-Richtung - mehr als das 1,5-fache, besonders bevorzugt mehr als das 5-fache, der Breite der Führung, hier des Abstands der auf entgegengesetzten Seiten des Schwerts 15B angeordneten Taschen 15A bzw. des Abstands der Lagerflächen 15C beträgt.

Zur fluidischen Lagerung werden die Taschen 15A mit einem entsprechenden Fluid, insbesondere einem Gas oder einer Flüssigkeit, beaufschlagt. Die Zuführung des Fluids erfolgt über entsprechende Leitungen und/oder Kanäle, die aus Vereinfachungsgründen nicht dargestellt sind. Im Betrieb wird dann ein Fluidfilm zwischen der jeweiligen Tasche 15A und der zugeordneten Lagerfläche 15B gebildet, wobei der Fluiddruck aufgrund der vorzugsweise paarweise entgegengesetzten Anordnung der Taschen 15A entgegengesetzt wirkt und dadurch das Schwert 15B bzw. die Taschen 15A definiert zwischen den Lagerflächen 15 hält und führt, und zwar verschieblich in die Bewegungsrichtung Z1 bzw. Längsrichtung der Seitenführung 15 bzw. des Schwerts 15B.

Die Flachführungen 14 sind vorzugsweise jeweils ähnlich oder entsprechend der Seitenführung 15 aufgebaut, weisen also insbesondere Taschen 14A, diese tragende Schwerter 14B und den Taschen 14A zugeordnete Gleit- bzw. Lagerflächen 14C auf. Die Lagerflächen 14C sind vorzugsweise wiederum von dem Gehäuseteil 4A und/oder einem sonstigen Einbauteil gebildet oder gehalten.

Die Lagerflächen 14C einer Flachführung 14 weisen vorzugsweise wiederum zueinander und/oder verlaufen parallel zueinander und/oder erstrecken sich vorzugsweise in die Bewegungsrichtung Z1.

Die Lagerflächen 14C erstrecken sich vorzugsweise horizontal. Die Lagerflächen 15C erstrecken sich hingegen vorzugsweise vertikal.

Die unteren Lagerflächen 14C der beiden Flachführungen 14 liegen vorzugsweise in einer gemeinsamen Ebene. Entsprechendes gilt vorzugsweise auch für die oberen Lagerflächen 14C der beiden Flachführungen 14.

Die Taschen 14A bzw. Schwerter 14B der Flachführungen 14 sind vorzugsweise an gegenüberliegenden Seiten bzw. Abflachungen 6A des Bauteils bzw. Lagerteils 6 angebracht, insbesondere angeschraubt. Insbesondere verlaufen diese beiden Abflachungen 6A für die Flachführungen 14 parallel zueinander und/oder erstrecken sich senkrecht.

Generell ist anzumerken, dass die Abflachungen 6A des Lagerteils 6 sich vorzugsweise zumindest im Wesentlichen über die gesamte Länge des Lagerteils 6 erstrecken.

Die lichte Spaltbreite zwischen Tasche 14A bzw. 15A und zugeordneter Lagehfläche 14C bzw. 15C beträgt vorzugsweise zumindest im Wesentlichen 20 bis 30 µm.

Die Flachführungen 14 dienen einer vertikalen Abstützung bzw. Lagerung des Bauteils bzw. Lagerteils 6 bzw. der Spindeleinheit 5, wobei die Beweglichkeit in Z1-Richtung erhalten bleibt, bilden jedoch vorzugsweise keine seitliche Führung. Die seitliche Führung wird vorzugsweise ausschließlich durch die Seitenführung 15 gebildet.

Die Seitenführung 15 führt vorzugsweise nicht in vertikaler Richtung, sondern vorzugsweise ausschließlich seitlich bzw. quer zur Bewegungsachse Z1 und/oder in horizontaler Richtung, wobei die gewünschte Längsbeweglichkeit in Z1-Richtung erhalten bleibt.

Die Flachführung 14 und die Seitenführung 15 bzw. deren Taschen 14A, 15A sind vorzugsweise zur fluidischen Lagerung oder Führung durch eine Flüssigkeit, wie Öl, insbesondere also zur hydrostatischen Führung bzw. Lagerung ausgebildet.

Das Lagerteil 6 weist vorzugsweise eine zumindest im Wesentlichen zylindrische Außenkontur auf. Dies ist einem kompakten, leichten Aufbau zuträglich.

Das Lagerteil 6 weist vorzugsweise eine zumindest im Wesentlichen zylindrische Innenkontur zur Aufnahme und drehbaren Lagerung der Spindel 7 auf. Entsprechende Lager oder Lagerelemente sind in Fig. 3 nur schematisch angedeutet. Vorzugsweise ist die Spindel 7 aerostatisch bzw. über nicht weiter dargestellte Luftlager im Lagerteil 6 drehbar gelagert.

Weiter umfasst die Spindeleinheit 5 einen (nicht dargestellten) Drehantrieb, insbesondere Elektromotor, zum drehenden Antreiben der Spindel 7. Der Elektromotor ist insbesondere in der Spindeleinheit 5 bzw. im Lagerteil 6 angeordnet.

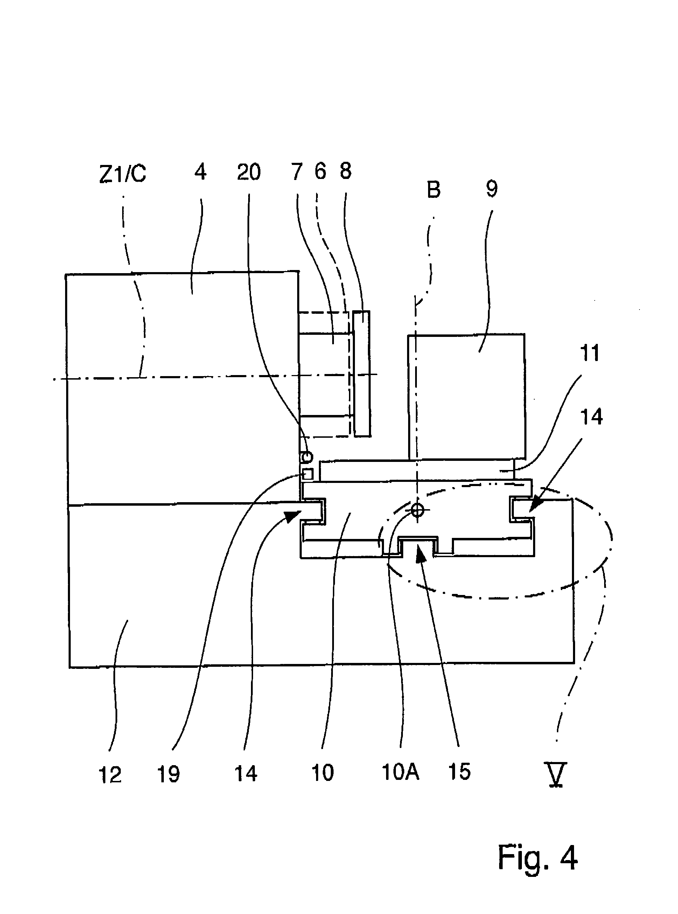

Das Lagerteil 6 kann sich auch über das Gehäuse des Werkstückantriebs 4 hinaus zum Spindelkopf hin bzw. bis zur Aufnahme 8 erstrecken und die Spindel 7 radial abdecken und/oder möglichst nah an der Aufnahme 8 lagern, wie in Fig. 4 gestrichelt angedeutet.

Die Vorrichtung 1 bzw. der Werkstückantrieb 4 weist vorzugsweise mindestens einen insbesondere eisenlosen Linearmotor 16, besonders bevorzugt zwei Linearmotoren 16, zur linearen Bewegung des Bauteils bzw. Lagerteils 6 bzw. der Spindeleinheit 5 und damit der Spindel 7 und des Werkstücks 2 in axialer Richtung bzw. Z1-Richtung auf, wie in Fig. 3 angedeutet.

Die Linearmotoren 16 sind vorzugsweise elektrisch betreibbar und weisen insbesondere jeweils einen Stator bzw. ein Sekundärteil 16A und einen zugeordneten Läufer bzw. ein Primärteil 16B auf.

Das Primärteil 16B weist jeweils die erforderlichen Erregerwicklungen auf und ist insbesondere eisenlos aufgebaut. Es ist vorzugweise zumindest im wesentlichen plattenartig ausgebildet.

Das Sekundärteil 16A, ist hier stationär angeordnet, besonders bevorzugt am Gehäuseteil 4A und/oder einem sonstigen Einbauteil. Es ist vorzugsweise U-förmig ausgebildet und/oder aus Permanentmagneten aufgebaut.

Die Linearmotoren 16, Sekundärteile 16A und/oder Primärteile 16B erstrecken sich vorzugsweise zumindest im wesentlichen entlang des Lagerteils 16, parallel zur Achse Z1 und/oder in einer Horizontalebene.

Die Linearmotoren 16 bzw. deren Primärteile 16B sind vorzugsweise jeweils direkt und/oder fest mit dem Bauteil bzw. Lagerteil 6 bzw. der Spindeleinheit 5 verbunden, insbesondere an einer vorzugsweise oberen Abflachung 6A des Lagerteils 6 angebracht, besonders bevorzugt angeschraubt.

Die Linearmotoren 16 bzw. Primärteile 16B sind vorzugsweise oberhalb der Achse C bzw. Z1 und/oder der Spindel 7 und/oder Flachführungen 14 und/oder symmetrisch zu bzw. auf entgegengesetzten Seiten der Vertikalebene V, die die Achse C bzw. Z1 enthält, angeordnet.

Die Linearmotoren 16 arbeiten vorzugsweise elektrisch und dienen insbesondere der gesteuerten bzw. geregelten Bewegung des Bauteils bzw. Lagerteils 6 bzw. der Spindeleinheit 5 bzw. der Spindel 7 bzw. des Werkstücks 2 in axialer Richtung bzw. Z1-Richtung.

Der Werkstückantrieb 4 bzw. dessen Gehäuseteil 4A weist vorzugsweise einen Deckel 4B auf, der die Spindeleinheit 5 und/oder das Lagerteil 6 bzw. das Gehäuseteil 4A bzw. die Linearmotoren 16 abgedeckt.

Die Vorrichtung 1 bzw. deren Werkzeugantrieb 4 weist vorzugsweise eine Messeinrichtung, insbesondere einen Maßstab 17 und eine zugeordnete Sensor- bzw. Detektionseinrichtung 18, auf, um die axiale Lage des Bauteils bzw. Lagerteils 6 bzw. der Spindeleinheit 5 und damit der Spindel 7 bzw. des Werkstücks 2 detektieren bzw. bestimmen zu können. Insbesondere erfolgt eine berührungslose, besonders bevorzugt optische, insbesondere interferometrische Erfassung bzw. Detektion.

Der Maßstab 17 ist vorzugsweise mit einer entsprechenden Gitterteilungen oder mit entsprechender Riffelungen, Markierungen, Mustern oder dergleichen versehen, um insbesondere optisch die axiale Lage bzw. Position erfassen zu können.

Der Maßstab 17 ist vorzugsweise fest mit dem Bauteil bzw. Lagerteil 6 bzw. der Spindeleinheit 5 verbunden. Insbesondere ist der Maßstab 17 am Lagerteil 6 und/oder oberhalb der Spindel 7 und/oder auf einer Abflachung 6A des Lagerteils 6 angeordnet, insbesondere angeschraubt.

Der Maßstab 17 ist vorzugsweise nur im Bereich seines dem Werkstück 2 bzw. der Aufnahme 8 der Spindel 7 benachbarten Endes fest eingespannt bzw. fest mit dem Lagerteil 6 verbunden, um bei thermischer Längsverformung des Lagerteils 6 keine Spannungen auf den Maßstab 17 auszuüben bzw. um den Maßstab 17 spannungsfrei anzubauen. Insbesondere wird die günstigste Position bzgl. des Werkstücks 2 oder Werkzeugs 3 gesucht. Allgemeiner ausgedrückt ist vorzugsweise vorgesehen, dass der Maßstab 17 nur in einem Bereich möglichst nah an dem gewünschten Messpunkt fest eingespannt bzw. fest mit dem zugeordneten Bauteil verbunden wird.

Der Maßstab 17 ist auf einem vorzugsweise sich thermisch wenig verformenden Material, insbesondere Glas oder Keramik, hergestellt.

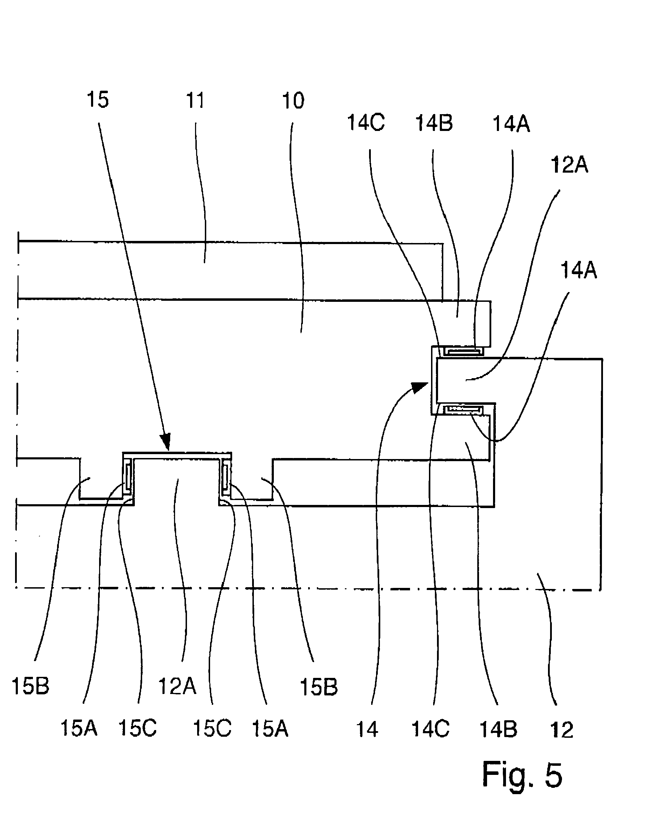

Nachfolgend wird die bevorzugte Lagerung und Führung eines anderen linear bewegbaren Bauteils der Vorrichtung 1, nämlich hier insbesondere des Schlittens 10, näher erläutert. Fig. 4 zeigt in einer schematischen, bezüglich des bevorzugten Führungsaufbaus detaillierteren Seitenansicht die Vorrichtung 1. Fig. 5 zeigt in einer schematischen Ausschnittsvergrößerung einen vergrößerten Ausschnitt von Fig. 4.

Vorzugsweise ist oder bildet das linear bewegliche Bauteil hier den Schlitten 10. Die Vorrichtung 1 weist zur linear beweglichen Führung des Bauteils bzw. Schlittens 10 vorzugsweise zwei Flachführungen 14 und/oder eine Seitenführung 15 auf. Die Führungen 14 und 15 sind vorzugsweise entsprechend oder zumindest im Wesentlichen ähnlich aufgebaut, wie die anhand des Werkstückantriebs 4 bzw. bezüglich der Lagerung des Lagerteils 6 bereits beschriebenen Führungen 14 und 15, so dass die diesbezüglichen Ausführungen und Erläuterungen insbesondere entsprechend oder ergänzend gelten. Nachfolgend werden insbesondere nur noch einige Besonderheiten hervorgehoben.

Die Vorrichtung 1 weist vorzugsweise einen Schlittenantrieb 10A, insbesondere einen Direktantrieb, wie einen Linearmotor, oder einen indirekten Antrieb, besonders bevorzugt einen Gewindetrieb oder eine hydrostatische Gewindelspindel oder dergleichen, auf, wie in Fig. 4 schematisch angedeutet.

Die Achse des Schlittenantriebs 10A bzw. einer Antriebsspindel dieses Antriebs 10A verläuft vorzugsweise horizontal und/oder parallel zur X-Richtung bzw. in X-Richtung und/oder entlang einer Längsmittelebene des Schlittens 10.

Der Schlittenantrieb 10A ist vorzugsweise unterhalb des Rundtischs 11 und/oder oberhalb der Seitenführung 15 und/oder in der Mitte bzw. Längsmittelachse des Schlittens 10 angeordnet.

Die Flachführungen 14 bzw. deren Taschen 14A und/oder Lagerflächen 14C sind vorzugsweise zumindest im Wesentlichen in oder symmetrisch zu einer den Schlittenantrieb 10A enthaltenden Horizontalebene und/oder der Achse des Schlittenantriebs 10A angeordnet.

Die Drehachse bzw. Rundachse B schneidet vorzugsweise die Längsmittelachse des Schlittens 10 und/oder Achse des Schlittenantriebs 10A und/oder eine Mittelachse der Seitenführung 15.

Die Seitenführung 15 bzw. deren Taschen 15A und/oder Lagerflächen 15C ist bzw. sind vorzugsweise symmetrisch zu einer die Achse des Schlittenantriebs 10A und/oder Rundachse B enthaltenden Vertikalebene angeordnet.

Die Führungen 14 und 15 weisen jeweils vorzugsweise voneinander wegweisende Lagerflächen 14C bzw. 15C auf. Die Taschen 14A bzw. 15A der jeweiligen Führung 14 bzw. 15 sind daher vorzugsweise paarweise zueinanderweisend und/oder gegenüber liegend an zwei beabstandeten Schwertern 14B bzw. 15B angeordnet, wie insbesondere aus Fig. 5 ersichtlich,

Die Schwerter 14B bzw. 15B verlaufen vorzugsweise in Längsrichtung bzw. X-Richtung und/oder parallel zueinander. Die Gleit- bzw. Lagerflächen 14C bzw. 15C einer Führung 14 bzw. 15 sind jeweils vorzugsweise an einem rippenartigen oder leistenartigen Vorsprung 12A des Maschinenbetts 12 oder eines sonstigen Einbauteils gebildet. Die Vorsprünge 12A greifen jeweils zwischen die zugeordneten Schwerter 14B bzw. 15B bzw. die zueinander weisenden Taschen 14A bzw. 15A ein.

Die Lagerflächen 14C und/oder 15C sind also vorzugsweise vom Maschinenbett 12 und/oder entsprechenden Einbau- oder Anbauteilen gebildet.

Die Taschen 14A und/oder 15A sind vorzugsweise am Bauteil bzw. Schlitten 10 befestigt.

Die Taschen 14A und/oder 15A weisen vorzugsweise paarweise zueinander.

Die Lagerflächen 14C und/oder 15C einer Führung 14 bzw. 15 weisen voneinander weg bzw. in entgegengesetzte Richtungen und/oder sind vorzugsweise auf entgegengesetzten Seiten eines leistenartigen Vorsprungs 12A, der insbesondere von dem Maschinenbett 12 oder einem sonstigen Einbauteil gebildet ist, angeordnet.

Die Flachführungen 14 und/oder Seitenführung 15 bzw. die Taschen 14A und 15A sind vorzugsweise zur hydrostatischen Lagerung des Bauteils bzw. Schlittens 10 ausgebildet.

Die vorschlagsgemäße Vorrichtung 1 weist als linear bewegbares Bauteil vorzugsweise nicht nur das Lagerteil 6 bzw. die Spindeleinheit 5 und/oder den Schlitten 10, sondern alternativ oder zusätzlich vorzugsweise auch den Halter 9A mit dem zugeordneten Werkzeug 3 auf. Dieses Bauteil bzw. das Werkzeug 3 und der Halter 9A sind mittels des Linearantriebs 9, insbesondere in Abhängigkeit von der Rotationslage des Werkstücks 2, vor- und zurück bewegbar, wie bereits beschrieben.

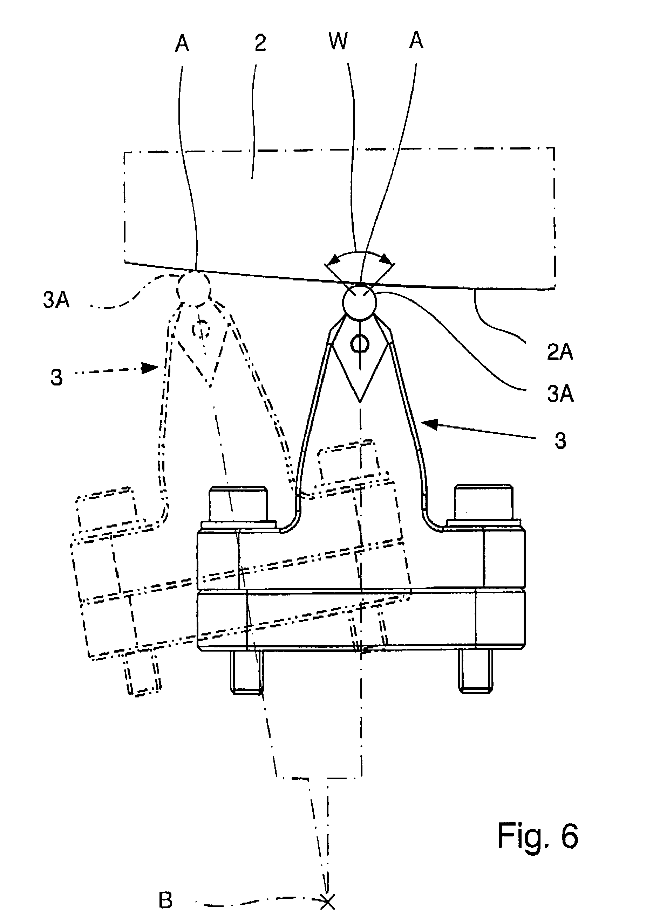

Gemäß einem bevorzugten Aspekt der vorliegenden Erfmdung wird während der Bearbeitung der Flachseite 2A eines Werkstücks 2 der Anlagepunkt A einer Schneide 3A des Werkzeugs 3 am Werkstück 2 variiert, wie in der schematischen Darstellung gemäß Fig. 6 angedeutet. Fig. 6 zeigt in einer schematischen, ausschnittsweisen Ansicht von oben einen Teil des zu bearbeitenden Werkstücks 2 und das am Werkstück 2 bzw. dessen Flachseite 2A mit einer Schneide 3A angreifende Werkzeug 3.

Das Werkzeug 3 ist mit durchgezogener Linie in einer ersten Position dargestellt und gestrichelt in einer zweiten, anders geneigten Position dargestellt.

Insbesondere wird das Werkzeug 3 um eine Achse quer oder senkrecht zu der Rundachse C, insbesondere um die vertikale Achse B, verschwenkt bzw. gedreht, um den Anlagepunkt A der Schneide 3A am Werkstück 2 bzw. der Flachseite 2A zu variieren. In Abhängigkeit von dem Winkel W, um den das Werkzeug 3 gedreht wird, wird der Anlagepunkt A der Schneide 3A am Werkstück 2 variiert. Dementsprechend kann ein zu dem Winkel W korrespondierender Bereich oder Randbereich oder Umfangsbereich der Scheide 3A je nach Drehstellung des Werkzeugs 3 bzw. Neigung des Werkzeugs 3 zum Werkstück 2 zur Bearbeitung eingesetzt werden.

Bei einer Variation des Anlagepunkts A kann immer eine Ausgleichsbewegung in der X-Achse - je nach Bedarf - erfolgen.

Durch die vorzugsweise vorgesehene Variation des Anlagepunkts A der Schneide 3A am Werkstück 2 während der Bearbeitung einer Flachseite 2A ein und desselben Werkstücks 2 kann der Verschleiß der Schneide 3A während der Bearbeitung über einen größeren Bereich verteilt werden, so dass eine hochgenaue Bearbeitung des Werkstücks 2 bzw. der Flachseite 2A ermöglicht oder erleichtert wird.

Bedingt durch längere Verspanungszeiten bei komplexen Flächen tritt oftmals ein lokaler Schneidkantenverschleiß ein, der das Bearbeitungsergebnis verschlechtern kann. Bei der Drehbearbeitung beeinflusst die am weitesten vorstehende Schneidkante 3A die Werkstückgeometrie, so dass je nach Bearbeitungsvorgang (Schruppen, Schlichten) und recht langer Bearbeitungszeit von ggf. einer Stunde oder mehr, die zur Verfügung stehende Schneidkante 3A über einen größeren Bereich bzw. Umfangsbereich gezielt genutzt werden kann. Dies wird hier vorschlagsgemäß durch Verschwenken des Werkzeugs 3 bzw. Linearantriebs 9 ermöglicht, so dass verschiedene Schneidbereiche der vorzugsweise aus Diamant bestehenden Schneide 3A in Eingriff gebracht werden können. Hierdurch kann die Bearbeitungsgenauigkeit sehr hoch gehalten werden.

Insbesondere beträgt der Winkel W, um den das Werkzeug 3 während der Bearbeitung eines Werkstücks 2 verschwenkt wird, mehr als 5°, besonders bevorzugt mehr als 10° und ganz besonders bevorzugt etwa 20° oder mehr.

Insbesondere beträgt der Winkel W weniger als 30°, besonders bevorzugt weniger als 25°.

Vorzugsweise wird das Werkstück 2 bzw. dessen Flachseite 2A in mehreren Schritten oder Durchgängen bearbeitet, insbesondere erfolgt zunächst ein Schruppen (Grobbearbeitung) und dann ein Schlichten (Feinbearbeitung). Beispielsweise kann auch ein mehrmaliges Schruppen und dann ein anschließendes Schlichten, ggf. auch in mehreren Schritten oder Durchgängen, erfolgen.

Besonders bevorzugt wird für einige oder alle der vorgenannten Bearbeitungsvorgänge bzw. Durchgänge dasselbe Werkzeug 3 verwendet.

Besonders bevorzugt wird oder werden für die Grobbearbeitung bzw. das Schruppen ein erster Bereich der Schneide 3A, besonders bevorzugt ein seitlicher Bereich oder mehrere (seitliche) Bereiche, insbesondere auf beiden Seiten eines mittleren Bereichs, und für das Feinbearbeiten bzw. Schlichten oder abschließende Bearbeiten ein zweiter Bereich der Schneide 3A, besonders bevorzugt ein mittlerer Bereich der Schneide 3A, eingesetzt. Bedarfsweise kann auch für jeden Bearbeitungsvorgang bzw. Durchgang ein separater Bereich der Schneide 3A des gleichen Werkzeugs 3 eingesetzt werden. Alternativ oder zusätzlich können zur Bearbeitung desselben Werkstücks 2 auch mehrere unterschiedliche oder gleichartige Werkzeuge 3 eingesetzt werden.

Unter dem "mittleren Bereich" ist insbesondere der vordere Bereich der Schneide 3A des Werkzeugs 3 zu verstehen, der bei zumindest im Wesentlichen parallel zu der Rotationsachse C des Werkstücks 2 ausgerichteter Bewegungsachse Z2 des Werkzeugs 3 bei der Bearbeitung nach vorne zum Werkstück 2 hin vorsteht bzw. an diesem angreift.

Vorzugsweise weist das Werkzeug 3 eine zumindest im Wesentlichen gerundete oder rundliche Schneide 3A bzw. eine Schneide 3A auf, die in der Draufsicht gebogen bzw. kreissegmentartig ausgebildet ist.

Der Krümmungsradius der Schneide 3A beträgt vorzugsweise mindestens 0,5, insbesondere mehr als 1 mm.

Der Radius der Schneide 3A beträgt vorzugsweise weniger als 5 mm, insbesondere weniger als 3 mm, besonders bevorzugt im Wesentlichen etwa 2 mm oder weniger.

Die Drehachse, um die das Werkzeug 3 bzw. der Linearantrieb 9 mit dem Werkzeug 3 geschwenkt wird, verläuft vorzugsweise zumindest im Wesentlichen parallel zu der Tangentialrichtung der Relativbewegung von Schneide 3A und Werkstück 2 im Bereich des Anlagepunkts A, also beim Darstellungsbeispiel zumindest im Wesentlichen vertikal, da das Werkzeug 3 mit seiner Schneide 3A zumindest im Wesentlichen in einer die Drehachse C enthaltenden Horizontalebene, also entlang eines horizontalen Radius am Werkstück 2 bzw. dessen Flachseite 2A angreift.

Ein vorschlagsgemäßes Verfahren zur Bearbeitung des Werkstücks 2 zeichnet sich auch dadurch aus, dass das Werkstück 2 in Richtung der Rotationsachse C mittels mindestens eines Linearmotors 16 zu dem Werkzeug 3 zugestellt wird, wobei der Linearantrieb 9 mittels des Schlittens 10 in einer Querrichtung X quer zur Rotationsachse C verstellt und mittels eines vom Schlitten 10 getragenen Rundtischs 11 um eine Achse quer zur Rotationsachse C und Querrichtung X geschwenkt wird. Dies ermöglicht eine optimale Anstellung des Werkzeugs 3 und eine schnelle und genaue Bearbeitung bei möglichst geringem Hub des Linearantriebs 9, also des Fast-Tool-Antriebs, wohingegen längere Verfahrwege oder durch demgegenüber relativ langsame Zustellung des Werkstücks 2 bzw. durch die demgegenüber relativ langsame Linearachse Z1 realisiert werden bzw. wird.

Die vorschlagsgemäße Vorrichtung 1 und das vorschlagsgemäße Verfahren eignen sich insbesondere für hochpräzise Bearbeitungen und/oder beispielsweise die Fertigung sehr großer Metallspiegel oder dergleichen.

Vorzugsweise wird die Oberfläche bzw. Flachseite 2A ausschließlich durch Drehen, insbesondere Stirndrehen, bearbeitet, und zwar fertig bearbeitet. Besonders bevorzugt soll also kein nachfolgendes Polieren erfolgen.

Die Bearbeitungsgenauigkeit liegt vorzugsweise bei mindestens 1 µm. Besonders bevorzugt erfolgen Bearbeitungen mit einer Genauigkeit im Bereich von 10 bis 100 nm.

Besonders bevorzugt erfolgt eine Bearbeitung oder Herstellung von asphärischen oder nicht symmetrischen optischen Flächen, beispielsweise für Headup-Displays oder dergleichen.

Vorzugsweise trägt der Schlitten 10 seitlich einen Maßstab 17, wie in Fig. 4 schematisch angedeutet, Insbesondere ist dem Maßstab 17 des Schlittens 10 eine entsprechende Sensoreinrichtung 18 zugeordnet. Diese ist beispielsweise am Maschinenbett 12 oder Werkzeugantrieb 4 angeordnet bzw. gehalten. Die bisherigen Ausführungen und Erläuterungen bezüglich des Maßstabs 17 am Lagerteil 16 und der diesem zugeordneten Sensoreinrichtung 18 gelten hier vorzugsweise entsprechend oder ergänzend.

Zur Messung der Lage des Schlittens 10 ist vorzugsweise ein optisches Messsystem vorgesehen. Insbesondere ist ein Maßstab oder Referenzlineal 19 am Schlitten 10 angeordnet, besonders bevorzugt im Bereich einer hinteren Längskante, wie in Fig. 4 schematisch angedeutet. Das Referenzlineal ist vorzugsweise zumindest im Wesentlichen wie der Maßstab 17 ausgebildet, so dass die diesbezüglichen Erläuterungen insbesondere entsprechend oder ergänzend gelten.

Das Messen erfolgt vorzugsweise jeweils optisch, insbesondere interferometrisch.

Dem Referenzlineal 19 ist vorzugsweise eine Sensoreinrichtung 20 zur insbesondere berührungslosen bzw. optischen Erfassung der Lage des Referenzlineals 19 und damit der Lage des Schlittens 10 zugeordnet. Die Sensoreinrichtung 20 ist beispielsweise vom Maschinenbett 12 oder von dem Werkstückantrieb 4 gehalten. Jedoch sind auch andere konstruktive Lösungen möglich.

Bei der Spindeleinheit 5 handelt es sich vorzugsweise um ein so genanntes Slow-Tool bzw. eine relativ langsame Linearachse Z1.

Die vorschlagsgemäße Vorrichtung 1 und das vorschlagsgemäße Verfahren sehen vorzugsweise nur zwei langsame Linearachsen bzw. Slow-Achsen, nämlich die X-Achse und die Z1-Achse, vor. Hinzu kommt vorzugsweise lediglich die Bearbeitungsachse bzw. Fast-Tool-Achse, also die schnelle Linearachse Z2 bzw. die Werkzeugachse. Dies ist einer hoch genauen Bearbeitung zuträglich.

Das Maschinenbett 12 ist vorzugsweise bzw. zumindest teilweise aus Stein, insbesondere Granit, hergestellt und/oder zumindest im Wesentlichen quaderförmig ausgebildet.

Die leistenförmigen Vorsprünge 12A sind vorzugsweise durch entsprechende Leisten, insbesondere aus Stahl, hergestellt. Beim Darstellungsbeispiel sind die Führungs- bzw. Stahlleisten mit dem vorzugsweise aus Stein bzw. Granit bestehenden Maschinenbett 12 verschraubt.

Das Messen erfolgt vorzugsweise jeweils optisch, insbesondere interferometrisch.

Der Schlitten 10 ist vorzugsweise aus einem gegossenen Grundgestell oder Rahmen und/oder aus Stein aufgebaut. Besonders bevorzugt ist das Grundgestell von einer eine Tischplatte bildenden Steinplatte abgedeckt.

Die Vorrichtung 1 bzw. der Schlitten 10A weist vorzugsweise ein Messsystem, insbesondere einen Messtaster 21, auf, um das Werkstück 2 vorzugsweise direkt im eingespannten Zustand vermessen zu können. Insbesondere ist ein Ausspannen und separates Vermessen des Werkstücks 2 vorzugsweise nicht erforderlich. Der Messtaster 21 ist in Fig. 2 schematisch angedeutet.Die Vorrichtung 1 bzw. der Schlitten 10 weist vorzugsweise eine Fräseinrichtung 22 auf, wie in Fig. 1 schematisch angedeutet, insbesondere um eine hoch präzise Referenzfläche am Werkstück 2, insbesondere für Messzwecke oder Korrekturzwecke, herstellen zu können.

Vorzugsweise ist die Fräseinrichtung 22 bzw. deren Drehmeißel zur Werkstückspindel-Mitte bzw. Drehachse C ausgerichtet, so dass Fräsungen vorzugsweise überall am Werkstück 2 möglich sind.

Alternativ oder zusätzlich kann die Fräseinrichtung 22 auch für eine in Grobbearbeitung oder Vorbearbeitung bzw. ein Schruppen des Werkstücks 2 eingesetzt werden.

Einzelne Merkmale und Aspekte der Vorrichtung 1 bzw. des Verfahrens zur Bearbeitung können auch unabhängig voneinander und in jeder beliebigen Kombination realisiert werden.

### Bezugszeichenliste

- 1: Vorrichtung
- 2: Werkstück
- 2A: Flachseite
- 3: Werkzeug
- 3A: Schneide
- 4: Werkstückantrieb
- 4A: Gehäuseteil
- 4B: Deckel
- 5: Spindeleinheit
- 6: Lagerteil
- 6A: Abflachung
- 7: Spindel
- 8: Aufnahme
- 9: Linearantrieb
- 9A: Halter
- 10: Schlitten
- 10A: Schlittenantrieb
- 11: Rundtisch
- 12: Maschinenbett
- 12A: Vorsprung
- 13: Steuereinrichtung
- 14: Flachführung
- 14A: Tasche
- 14B: Schwert
- 14C: Lagerfläche
- 15: Seitenführung
- 15A: Tasche
- 15B: Schwert
- 15C: Lagerfläche
- 16: Linearmotor
- 16A: Sekundärteil
- 16B: Primärteile
- 17: Maßstab
- 18: Sensoreinrichtung
- 19: Referenzlineal
- 20: Sensoreinrichtung
- 21: Messtaster
- 22: Fräseinrichtung

- A: Anlagepunkt
- B: Rundachse
- C: Rundachse
- H: Horizontalebene
- W: Winkel
- V: Vertikalebene
- X: Linearachse
- Z1: Linearachse
- Z2: Linearachse

## Patentansprüche

1. Vorrichtung (1) zur vorzugsweise spanenden bzw. drehenden Bearbeitung eines vorzugsweise optischen Werkstücks (2), insbesondere einer optischen Flachseite (2A), mittels eines Werkzeugs (3), vorzugsweise durch Stirndrehen,
mit einem linear bewegbaren Bauteil zur linearen Bewegung des zugeordneten Werkstücks (2) oder Werkzeugs (3) in vorzugsweise horizontaler Bewegungsrichtung (X, Z1, Z2),
**dadurch gekennzeichnet,**
**dass** die Vorrichtung (1) zwei Flachführungen (14) zur fluidischen Führung des Bauteils und Abstützung in vertikaler Richtung an zwei gegenüberliegenden Seiten des Bauteils und eine vorzugsweise unter dem Bauteil angeordnete Seitenführung (15) zur fluidischen Führung des Bauteils seitlich quer zur Bewegungsrichtung (X, Z1) aufweist, und/oder
**dass** die Vorrichtung (1) einen Werkstückantrieb (4) mit einer Spindeleinheit (5) aufweist, wobei die Spindeleinheit (5) ein Lagerteil (6) und eine darin drehbar gelagerte Spindel (7) aufweist, wobei das Bauteil das Lagerteil (6) ist oder bildet und wobei die Spindel (7) mit einer Aufnahme (8) zur Halterung des Werkstücks (2) versehen ist, und/oder
**dass** die Vorrichtung einen Rundtisch (11) und einen davon getragenen Linearantrieb (9) aufweist, der das Bauteil mit dem Werkzeug (3) vor- und zurück bewegt und während der Bearbeitung des Werkstücks (2) zur Variation des Anlagepunkts einer Schneide (3A) des Werkzeugs (3) am Werkstück (2) mittels des Rundtischs (11) schwenkbar ist.

2. Vorrichtung nach Anspruch 1, **dadurch gekennzeichnet, dass** die Drehachse der Spindel (7) in einer Horizontalebene (H) liegt und die Flachführungen (14) bzw. deren Lagerflächen (14C) in oder symmetrisch zu dieser Horizontalebene (H) angeordnet sind bzw. verlaufen.

3. Vorrichtung nach Anspruch 1 oder 2, **dadurch gekennzeichnet, dass** der Werkstückantrieb (4) zwei - insbesondere direkt - mit dem Lagerteil (6) verbundene Linearmotoren (16) bzw. Läufer (16B) zur linearen Bewegung des Lagerteils (6) bzw. der Spindeleinheit (5) in eine Bewegungsrichtung (Z1) aufweist, insbesondere wobei die Linearmotoren (16) bzw. Läufer (16B) symmetrisch zu einer die Bewegungsrichtung (Z1) enthaltenden Vertikalebene (V) angeordnet sind.

4. Vorrichtung nach einem der voranstehenden Ansprüche, **dadurch gekennzeichnet, dass** der Werkstückantrieb (4) einen Maßstab (17) aufweist, der direkt mit dem Lagerteil (6) verbunden ist.

5. Vorrichtung nach einem der voranstehenden Ansprüche, **dadurch gekennzeichnet, dass** das Lagerteil (6) eine zumindest im wesentlichen zylindrische Außenkontur aufweist.

6. Vorrichtung nach einem der voranstehenden Ansprüche, **dadurch gekennzeichnet, dass** das Lagerteil (6) Abflachungen (6A) im Bereich der Führungen (14, 15) und/oder für Schwerter (14B, 15B) und/oder eine Abflachung (6A), insbesondere in einem oberen Bereich, für den Maßstab (17) und/oder mindestens einen Linearmotor (16) oder mindestens ein Primärteil (16B) aufweist.

7. Vorrichtung nach Anspruch 1, **dadurch gekennzeichnet, dass** das Bauteil ein Schlitten (10) ist oder bildet.

8. Vorrichtung nach Anspruch 1 oder 7, **dadurch gekennzeichnet, dass** das Bauteil bzw. der Schlitten (10) einen Rundtisch (11) trägt und eine Mittelachse der Seitenführung (15) und/oder eine Achse eines Schlittenantriebs (10A) die Achse (B) des Rundtischs (11) schneidet.

9. Vorrichtung nach Anspruch 7 oder 8, **dadurch gekennzeichnet, dass** die Flachführungen (14) und/oder Seitenführung (15) bzw. deren Taschen (14A, 15B) und/oder Lagerflächen (14C, 15C) symmetrisch zu einer vertikalen Mittelebene des Schlittens (10), angeordnet ist bzw. sind.

10. Vorrichtung nach einem der voranstehenden Ansprüche, **dadurch gekennzeichnet, dass** die Flachführungen (14) und/oder die Seitenführung (15) jeweils zwei paarweise gegenüberliegende Taschen (14A, 15A) aufweisen bzw. aufweist.

11. Vorrichtung nach einem der voranstehenden Ansprüche, **dadurch gekennzeichnet, dass** die Flachführungen (14) und/oder die Seitenführung (15) jeweils ein Schwert (14B, 15B) mit zugeordneten, gegenüberliegenden Taschen (14A, 15A) und/oder leistenförmige Vorsprünge (12A) mit Lagerflächen (14C, 15C) zur fluidischen Lagerung aufweisen bzw. ausweist.

12. Vorrichtung nach Anspruch 11, **dadurch gekennzeichnet, dass** die Schwerter (14B, 15B) an Abflachungen (6A) des Lagerteils (6) angeordnet sind.

13. Vorrichtung nach einem der Ansprüche 10 bis 12, **dadurch gekennzeichnet, dass** die Taschen (14A, 15A) mit dem Bauteil fest verbunden und mit diesem zusammen bewegbar sind.

14. Vorrichtung nach einem der voranstehenden Ansprüche, **dadurch gekennzeichnet, dass** die Flachführungen (14) und die Seitenführung (15) zur hydrostatischen Führung ausgebildet sind.

15. Verfahren zum Stirndrehen einer optischen Flachseite (2A) eines optischen Werkstücks (2), wobei das Werkstück (2) um eine Rotationsachse (C) rotiert und ein Werkzeug (3) mittels eines Linearantriebs (9) in Abhängigkeit von der Rotationslage des Werkstücks (2) vor- und zurückbewegt wird,
**dadurch gekennzeichnet,**
**dass** während der Bearbeitung der Flachseite (2A) des Werkstücks (2) der Linearantrieb (9) zur Variation eines Anlagepunkts (A) einer Schneide (3A) des Werkzeugs (3) am Werkstück (2), vorzugsweise um eine vertikale Achse (B), geschwenkt wird, und/oder
**dass** das Werkstück (2) in Richtung der Rotationsachse (C) mittels eines Linearmotors zu dem Werkzeug (3) zugestellt wird, wobei der Linearantrieb (9) mittels eines Schlittens (10) in einer Querrichtung (X) quer zur Rotationsachse (C) verstellbar und mittels eines vom Schlitten (10) getragenen Rundtischs (11) um eine Achse (B) quer zur Rotationsachse (C) und Querrichtung (X) geschwenkt wird.
